# EUROPEAN PATENT APPLICATION

(11) **EP 2 141 643 A1**
(43) Date of publication of application: **06.01.2010**
(21) Application number: 08012093.4
(22) Date of filing: 04.07.2008
(51) Int. Cl.: G06Q 10/00, G06F 21/00, G06Q 20/00

(54) **Software usage controlled by CPU utilization**

(71) Applicant: Koninklijke KPN N.V., 2516 CK The Hague (NL)
(72) Inventor: Van Steenbergen, Ate Sander, 9737 NN Groningen (NL); Keijzer, Herman, 9727 DN Groningen (NL)
(74) Representative: Wuyts, Koenraad Maria

(57) **Abstract**

A data processing apparatus has a data processor manager that checks and updates the credit account that is associated with the usage of a software application at the apparatus. The processor manager determines whether or not to proceed with execution of the software application dependent on the number of processor cycles left in the credit account. If the number of processor cycles in the account falls below a predetermined threshold, the software application is barred from being executed further. The user then can replenish the account by means of purchasing or otherwise obtaining further credits in terms of processor cycles for spending on the future execution of the software application. In this manner, a scenario is implemented for a business model based on prepaid software wherein the user pays exactly for the actual usage in terms of processor cycles.

## Description

### FIELD OF THE INVENTION

The invention relates to a data processing system comprising a data processor for executing a software application for an end-user. The method also relates to a method of controlling execution of a software program for an end-user on such system, and to a software application for being executed on such system

### BACKGROUND ART

Software or program applications are commercially supplied in a variety of manners, e.g., as downloads via the Internet, as stored on a physical data carrier such as an optical disc or a memory card, as a service on a data network via which the user interacts with the software that resides on a server, etc. The user is typically required to pay a one-time-only fee or a fixed monthly fee to the provider, regardless of how many times the end-user actually interacts with the software. From the perspective of the user, these commercial scenarios may act as a barrier to purchasing the software and may have additional disadvantages. For one reason, the user is not certain in advance whether or not he/she is going to like using the software. For another reason, the user typically does not know in advance if he/she is going to use the software frequently enough in order to warrant the financial investment. For yet another reason, software such as games may become obsolete rather quickly in view of upgraded versions of the existing software or in view of totally new program applications that provide enhanced functionality. From yet another perspective, users of online services may not become aware of running up the bills until they receive the invoice of the service provider. Examples are widely known of people who have gotten into financial problems just because of that.

### SUMMARY OF THE INVENTION

In view of the above, it may be advisable to develop additional business models to facilitate the decision-making process of the potential buyer and to make the financial aspects more flexible and personal as regarded by the potential end-user.

To this end, the inventors propose a data processing system comprising a data processor for executing a code of a software application for an end-user. The system comprises a memory for storing a credit value representative of a number of processor cycles available for being spent on execution of the code. The system comprises a processor manager. The processor manager is operative to control the execution of the code in dependence on the credit value.

Accordingly, the inventors propose to implement a new functionality, referred to as the processor manager. The processor manager can be implemented in hardware, in software, or as a combination of both. The processor manager checks the credit account that is associated with the software application and that control the execution of the code accordingly..

In an embodiment, the processor manager is configured for preventing the execution of the code if the credit value is absent from the memory. That is, if there is no credit value associated with the software application, the processor manager prevents the running of the application.

In a further embodiment, the system comprises a cycle counter for determining a specific number of processor cycles spent on execution of the code. The cycle counter also supplies information representative of the specific number of the processor cycles determined. The processor manager is operative to adjust the credit value on the basis of the specific number of processor cycles determined. That is, the number of processor cycles consumed by a software application is charged to the credit account of the software application.

As known, the thread scheduler in an operating system, e.g., Windows Vista, uses the cycle counter register of modem processors to track precisely how many CPU cycles a thread executes. Accordingly, a thread and a specific software application are identified with respect to the processor manager so as to be able to associate a credit value with a certain software application.

In a further embodiment, the processor manager is operative to determine whether the credit value is higher than a predetermined threshold; and to prevent the execution of the code if the credit value is not higher than the predetermined threshold. That is, the processor manager determines whether or not to proceed with execution of the code of the software application dependent on the number of processor cycles left in the credit account. If the number of processor cycles in the account falls below a predetermined threshold, the code of the software application is barred from being executed further.

Generally, the performance of a data processor depends on the processor's underlying architecture, on the cache, bus and clock speeds, etc. Therefore, it is an interesting scenario to vary the cost per cycle depending on the system hardware of the user. Industry benchmark results on processors and system performance can be used to determine the relative variation in cost per cycle for the different system configurations.

The processor manager does not allow execution of the software application if it has determined in advance that the credit level is lower than a certain threshold. The threshold is determined in advance and may be set to any convenient level of granularity, e.g., a level insufficient for a typical single session of user interaction with the software application, or insufficient for user interaction with a module of the application, in which user interaction proceeds along a sequence of different modules, etc. This gives a relatively simple procedure to halt execution as only the thread scheduler is involved. Generally, it is not desirable to halt the execution of the application while the processor or CPU is processing the instructions or data associated with the application. Also, it is generally not desirable to *continually* keep track of the consumption of processor cycles by the software application, i.e., during execution of the application. In practice, the code of a software application is executed only intermittently for only a number of cycles, if only to reserve compute time for the background processes. Accordingly, the processor manager can be implemented to abort execution of the application, or freeze the application, if the credit level has already dropped below the threshold.

For completeness, reference is made to US patent 6,085,218, herein incorporated by reference. This publication discloses monitoring a hard, real-time, multi-tasking system. In order to guarantee system integrity in a hard, real-time multi-tasking system, each real-time program task must be held to specify, in advance, the maximum number of processor cycles that it will use for each program execution. If any one of the individual programs running in the system consumes more processor cycles than allocated, it or some other program may not have sufficient time or processor cycles left to meet real-time deadlines. The solution is that, in a hard real-time system, actual task processor cycle usage must be allocated and managed and measured correctly. Just as robust, non-real-time multi-tasking systems need methods of keeping individual programs within their allocated memory boundaries, a hard real-time multi-tasking system needs a method of keeping the program within the processor usage allocation. Complicating this problem is the fact that a given task or program does not necessarily execute in a contiguous time block. A particular program's execution period may be interrupted by a system interrupt handling routine or a higher priority program interrupt. To accurately ensure that a task itself does not exceed its own maximum processor cycle allocation, a mechanism and process have been provided which accurately counts only the processor cycle used by each individual program. A counter is implemented with logic that prevents advancing the counter when DMA or interrupts occur. A hybrid system in which hardware logic and counters are implemented in the processor and a management routine having minimum overhead is run in order to keep track of consumed machine cycles for each task provides the solution.

This publication discloses keeping track of processor utilization in terms of processor execution cycles utilized by a software application within the context of hard, real-time multi-tasking systems. However, this publication neither teaches nor suggests creating and managing a credit account of processor cycles for controlled user access to the software application. Another drawback is that this known system needs the information in advance about the maximum number of cycles necessary for the process to be run. On the other hand, note that in the invention this information is not needed .The invention is therefore highly suitable for scenarios, wherein it is not known in advance how the process is going to be used.

Preferably, the system has means for conditionally increasing the credit upon a dedicated interaction of the end-user with the data processing system. The user then can replenish the account by means of purchasing or otherwise obtaining further credits in terms of processor cycles that are available for spending on the future execution of the software application. In this manner, a scenario is implemented for a business model based on, e.g., prepaid, software wherein the user pays exactly for the actual usage in terms of processor cycles.

In an embodiment of the system of the invention, the means for conditionally increasing the credit comprises an interface to a data network for enabling a remote source to increase the credit value via the data network. For example, the user contacts the service provider via the data network, and the service provider increases the credit via the data network when the user has purchased a next amount of processor cycles. Alternatively, the end-user has subscribed to the service and pays, e.g., a monthly fee for a monthly increase of his/her credit value in terms of additional processor cycles for use with one or more specific software applications that have been made available by, or through, the service provider. The software applications can be run on, e.g., the end-user's personal computer (PC). The end-user is given access to the software application (or software applications) after one or more downloads from the service provider via the Internet, after having installed the application(s) on his/her PC via one or more information carriers, e.g., a CD or DVD, supplied at a store. The download or information carrier can be supplied free of charge or for a nominal fee representative of a certain number of processor cycles. The download or information carrier can also contain the control software that monitors, or otherwise manages, access to the pre-paid software application.

Use of the pre-paid software application (or pre-paid software applications) will be charged to the user's credit and, accordingly, the credit level decreases during operational use of the software application. The service provider may have specified that use of a specific one of the applications is more expensive than another one of the applications. For example, one credit point represents 5 processor cycles for use with a first pre-paid software application, and 10 processor cycles for use with a second pre-paid software application. The first application is then twice more expensive that the second application in terms of credit consumption per processor cycle. This approach of charging different credit points to different software applications enables the service provider to diversify, or personalize, a menu of different software applications from which the end-user can choose within the same system, within the same subscription and with the same credit level. For example, the service provider may charge more credit points for the same number of processor cycles used with a specific software application during certain times of the day than during other times. This can be used a tool that assists in, e.g., controlling the density of data traffic on the data network in a massive multi-player computer game, or the CPU power required at the server in order to run the game.

An additional advantage resides in the fact that the subscriber only has to enter into a single contract with the service provider, and that the subscriber has to use only a single identifier in order to have access to a variety of software applications.

The service provider may have obtained the software applications from, e.g., a software provider, software creator or an independent software vendor, under conditions that specify, among other things, that the service provider is charged on a "per-use" basis. The invention now provides the infrastructure that enables to determine the use per software application and per end-user so as to be able to implement this business model. Also note that the payment of the fees due, on the one hand, and the delivery of the software application, e.g., as download or on an information carrier, on the other hand, are separate events. The events are separate in the sense that the fees fall due after the credit has assumed a value below a certain threshold as a result of use of the software application, and not necessarily at the time of the delivery or in advance.

In another embodiment, the means for conditionally increasing the credit comprises an interface for system interaction with a removable component for enabling to increase the credit value via system interaction with the removable component. For example, the removable component is a pre-paid value-stored card, similar to a pre-paid telephone card, that can be purchased at the supermarket. Other examples of such removable component are a USB stick and a smart card.

In still another embodiment, the means for conditionally increasing the credit comprises a module in the software application that comprises instructions for conditionally increasing the credit upon the end-user entering a password into the system. In this scenario, the user has to enter a password or another identifier, specific to the user and to the software application, that the user can buy from the service provider.

In a further embodiment, the system of the invention is accommodated in an electronic apparatus, such as a consumer-electronics (CE) apparatus, examples of which include a mobile telephone, a media player, a personal computer, a personal navigation device, a TV, a radio, a printer, etc.

As to the example of the printer, note that printer manufacturers have based their business model on the sales of ink-cartridges that go with their printers. Typically, the ink-cartridges from a first printer manufacturer are incompatible with printers from a second manufacturer, and vice versa. From the end-user's point-of-view, this incompatibility leads to prices that are kept artificially high. Also, from the view point of the distributor and retailer, the lack of standardization is a disadvantage as a suitably large inventory of cartridges must be kept. The cartridges have a limited time-of-life and must be discarded after having sat on the shelves for a particular time. The invention now supports standardizing the cartridges and having the end-user pay on a per-use basis to the manufacturer as monitored by the processor manager.

Similar considerations apply to the professional market, relating to, for example, printers, copiers, computer-aided design / computer-aided manufacturing (CAD/CAM) applications or systems, computer-controlled tools such as lathes, milling machines, etc., medical scanning systems, such as magnetic resonance imaging (MRI) systems, systems for producing images representative of activity of human organs (e.g., electrocardiograms produced by picking up signals indicative of the electrical activity of the heart, or echocardiograms produced by ultrasound). Such professional systems or software application running on such systems can be provided with a processor manager so as to implement the invention.

The data processing system of the invention enables to implement a service to the end-user of the apparatus through control a software-controlled functionality of the apparatus. The user pre-pays per amount of CPU cycles spent on the execution of the software in operational use of the apparatus. When the user has run out of credit, there are various ways to replenish the credit, e.g., in the form of using pre-paid value-stored cards, or purchasing a password for unlocking the software for the next amount of CPU cycles, or in the form of having the service provider reconfigure the apparatus via a data network (using e.g., an over-the-air programming mechanism (OTA)) after the user has bought the next amount of CPU cycles, etc. The invention is commercially especially interesting to the CE market, as the costs of the software application are determined on the basis of usage. This scales the price to the actual usage, so that the investment can be afforded by everyone.

Accordingly, the invention enables to implement a way to charge end-users of a software application, or of a system whose operational use is controlled by such software application, on a per-use basis. This is in particular interesting to a first category of software applications, namely those that are run on data processing systems that never go online because of, e.g., security reasons or cost reasons. As to the latter scenario regarding costs, the end-user does not need access to the Internet in order to use the application. However, the invention is also interesting to a second category of software applications, namely those that are run on data processing systems that do go online, and to software applications that are hosted online, e.g., software-as-a-service (SaaS) applications. In the SaaS scenario, the software application is hosted as a service to end-users via the Internet. This eliminates the need for the end-user to take care of, e.g., maintenance and updates. Examples of SaaS include online desktops, e.g., used via remote desktop protocol (RDP) or Citrix. Citrix Systems is a company that provides software and services specific for thin clients and remote access software for delivery of applications over the Internet. The invention is also interesting to a third category of software applications, namely those that are genuinely hosted applications such as web services, hosted enterprise resource planning (ERP) systems, e.g., customer-relations management (CRM). The invention is also interesting to a fourth category of software applications, namely, to server applications such as the enterprise software provided by companies such as SAP AG and Oracle Corporation.

As to the third and fourth categories, the scenarios are flexible with respect to the question which party is going to be charged for the processor cycles used. One scenario is that the end-user of the application is charged as identified by his/her log-in code. Another scenario is that the party is charged who has purchased, leased or otherwise has been granted the right to provide others access to the software application. A still other scenario is a combination of these. For example, a provider of enterprise software owns the software, but the accountancy department and the human-resources department of a company, which is customer to the software provider, are the actual end-users. As another example, a corporation may decide to outsource the running of their website on a server of a service provider. Typically a server has a CPU that is capable of running several dozen of such websites. The corporation gets charged for running their website on the basis of the number of CPU cycles spent on running their website.

The listing of above four categories is not intended as being exhaustive and merely serves to illustrate aspects of a variety of business models. Other categories are feasible as well.

The invention also relates to a method of controlling execution of code of a software program for an end-user on a data processing system. The system comprises a data processor for executing the code of the software application. The method comprises accessing a memory for identifying a credit value representative of a number of processor cycles available for being spent on execution of the code. The method further includes controlling the execution of the code in dependence on the credit value.

In an embodiment of the method in the invention, the execution is prevented f the credit value is absent from the memory.

In a further embodiment, the method comprises determining information representative of a specific number of processor cycles spent on the execution of the code; and adjusting the credit value on the basis of the specific number of processor cycles determined.

In a further embodiment, the method comprises determining whether the credit value is higher than a predetermined threshold; and preventing the execution of the code if the credit value is not higher than the predetermined threshold.

The methods of the invention are relevant to distributed data processing as in a client-server architecture. As discussed above, an embodiment of the system comprises an interface to a data network. The method comprises increasing the credit value via the data network. In another embodiment, the system comprises an interface for system interaction with a removable component for enabling to increase the credit value via system interaction with the removable component. The method then comprises providing the removable component, e.g., a pre-paid stored-value card. In a still further embodiment of the method, the software application comprises instructions for conditionally increasing the credit upon the end-user entering a password into the system. The method then includes providing the password.

The invention also relates to control software, e.g., provided on a computer readable medium or as file downloadable over a data network, for controlling execution of a code of a software application on a data processing system. The system has a data processor for executing the code for an end-user. The control software comprises first instructions for accessing a memory in order to identify a credit value representative of a number of processor cycles for being spent on the execution of the code; and second instructions for implementing a processor manager functionality operative to control the execution of the code in dependence on the credit value.

In an embodiment of the control software in the invention, the second instructions include third instructions for preventing the execution of the code if the credit value is absent from the memory.

In a further embodiment, the data processing system comprises a cycle counter for determining a specific number of processor cycles spent on execution of the code and for supplying information representative of the specific number of the processor cycles determined. The second instructions of the control software comprise fourth instructions for adjusting the credit value on the basis of the specific number of processor cycles determined.

In a further embodiment, the second instructions comprise fifth instructions for determining whether the credit value is higher than a predetermined threshold and, if the credit value is not higher than the predetermined threshold, for preventing the execution of the code.

In a further embodiment, the second instructions include sixth instructions for conditionally increasing the credit value upon a dedicated interaction of the end-user with the data processing system.

The control software is, e.g., a tool to conditionally access a service on a data network or a tool to access a service provided by, or software application residing on, an electronic device, etc. As known, the thread scheduler in an operating system, e.g., Windows Vista, uses the cycle counter register of modem processors to track precisely how many CPU cycles a thread executes. Accordingly, a thread and a specific software application are identified with respect to the control software. The control software is therefore enabled to control execution of certain software application in dependence on a credit specifically allocated to this software application.

The control software of the invention enables certain business models. For example, different instances of the control software are configured to control execution of the same software application. The different instances may differ with respect to, e.g., the criterions used by the processor manager functionality in order to decide how to manage the credit and when to bar execution of the application's code. Different retailers or service providers, who provide the same software application or the same service based on the software application, can therefore differentiate among themselves by way of the criterions built into the processor manager functionality. The operation of the control software can, for example, be described by one or more parameters such as the number of processor cycles per unit of credit, the number of credit units per Euro or US Dollar, the specific software applications whose execution is charged to a particular credit account, the time slot during which the credit account can be used, etc. Different service providers and different software vendors may specify different values for these parameters in their products so as to individualize their business models.

The system in the invention can be implemented in a distributed fashion, e.g., as a client-server system using a data network such as the Internet. The server then enables the client to interact with the software running on the server, under the condition that the credit of this user is sufficient. The user can purchase a next amount of CPU cycles, e.g., by granting permission to the service provider by email to charge the user's bank account, by using a pre-paid value-stored card at the client, etc.

Further, consider a software application, whose use can be controlled through a credit value in the form of a pre-paid amount of CPU cycles, and whose functionality can assume various quality-of-service (QoS) levels. Consider, as an example, a software application that enables the user to use a service that provides video via a data network. The user may specify in advance, e.g., his/her preference with respect to the level of resolution of the rendered video (e.g., high or low; color or black-white), full range of different types of content information (movies, music clips, news, sports programs) or only a sub-set thereof, full content or abbreviated content (i.e., full-length or highlights only), etc. The user may opt for the scenario that, when his/her credit decreases below a next threshold, the service goes to a next lower level of QoS. In this manner, the user is made aware of the fact that his/her credit has reached a certain level, while only gradually losing access to the full service.

Above description has addressed example scenarios, wherein pre-paid options are being used to establish a credit in terms of processor cycles (e.g., the value-stored card), and scenarios wherein post-paid options are being used (e.g., charging a corporation for running their website on the basis of CPU cycles spent on running). In both types of scenarios, access to the software application is put on hold if the credit has dropped below a threshold level. In the latter, business- related scenario, the magnitude of the threshold level may depend on the relationship that the service provider has with the user. For example, the credit level may temporarily even assume a negative value.

In some business models exploiting the invention, the credit level consumption and/or credit level restoration is made dependent on a user-profile. For example, a more-frequent user of the application is identified by way of his/her higher frequency of obtaining credit level replenishments. This can be used to decrease the costs of upgrades of the credit level for this particular user, e.g., by lowering the costs per upgrade in terms of a fixed number of CPU cycles or by increasing the upgrade to a higher number of CPU cycles for a fixed cost. Such scenario rewards frequent users and enables, at the same time, the service provider to optimize their profits as a result of making it more attractive to a user to actually use the software application. In another scenario, more intensive use of the software application leads, in contrast, to more costly upgrades of the credit level. This latter scenario may be called into being if the higher use of the software application corresponds with, e.g., more intensive use of hardware resources or with using more hardware resources, or with increased support level in order to guarantee an adequate quality of service, or with a required peak level performance.

The credit of a user, in terms of processor cycles available for running a software application, can be used in a variety of business models. An example is that the credit is specific to a particular software application. That is, the credit can only be consumed by running a specific software application. Another example is that the credit is specific to one or more software applications from a specific vendor. That is, the credit can be used for any of a collection of software applications that have been acquired from a certain vendor. As a still other example, the processor manager can be given any kind of criterion in order to discriminate between software applications that are allowed to consume the credit and others that are not allowed and are therefore barred from being run in the absence of a valid credit account. In this manner, a check can be implemented that allows a user to interact with a computer game software application only during certain hours. Outside this time window, the credit account is blocked or is reset to zero. As yet another example, a brokerage service provider can conclude deals with a variety of software service providers or software vendors with regard to portfolios of services or of software applications, made available to end-users through the broker. The broker can tailor the fees, charged to the end-users on a "per-use" basis as discussed above, to the costs of the portfolios charged by the providers for making available the services or software applications in large quantities (i.e., wholesale). If the broker has sufficient data available about the usage across the population of end-users, statistic analysis of the usage, in terms of processor cycles per user per application or service, may help him to optimize the fees charged or the packages offered to the end-users. The usage, expressed in terms of processor cycles per end-user per unit of time, can be derived from monitoring the credit levels if these are maintained centrally at a server, or from monitoring how frequently the credits are replenished by means of buying processor cycles. In a centralized approach to the credit management for a population of end-users of the software applications, the instances of the control software at the data processing systems of the end-users can be polled via the Internet. This enables to derive information about this population in terms of the numbers of credit units or of processor cycles that have been spent on what types of software applications. This profiling could involve some privacy issues, or could be done without considering the identities of the end-users. This profiling can be used to optimize the quality of the services or to reduce costs.

In an embodiment of the invention, the operating system itself is considered a software application at a meta-level if controlled by a processor manager on the basis of credits allocated to the operating system. This approach enables to block at least part of the operating system in case the level of credit is insufficient. For example, all user initiated processes can be blocked (except the user-initiated processes that are involved in the renewal of the credit level) or the running of software applications can be blocked.

### BRIEF DESCRIPTION OF THE DRAWING

The invention is explained in further detail, by way of example and with reference to the accompanying drawing, wherein:
Fig. 1 is a block diagram of a data processing system in the invention;
Fig.2 is a block diagram of part of the system of the invention; and
Figs.3 and 4 are flow diagram illustrating methods according to the invention.

Throughout the Figures, similar or corresponding features are indicated by same reference numerals.

### DETAILED EMBODIMENTS

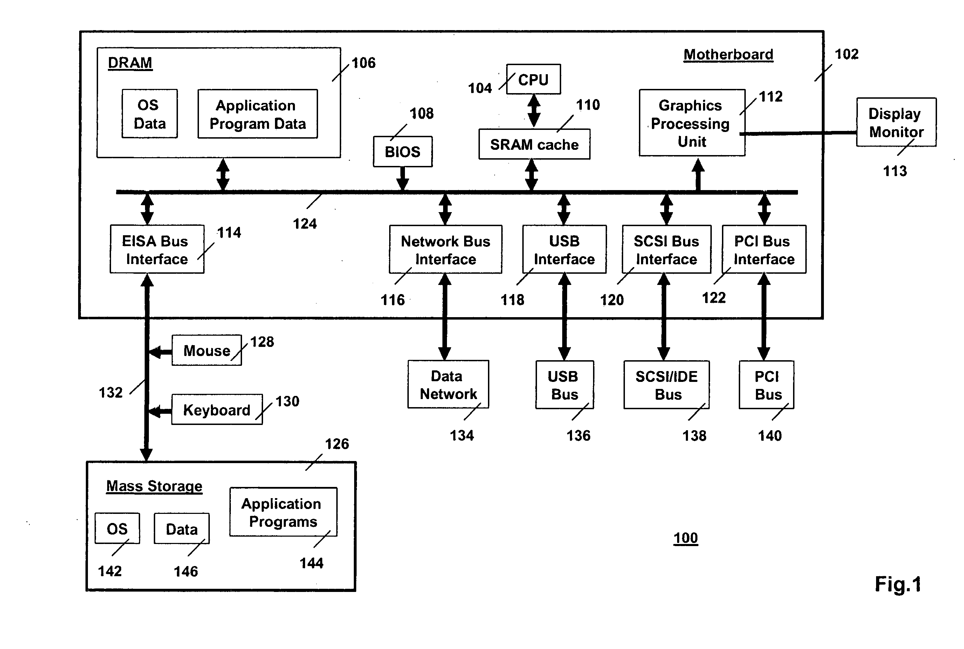

Fig. 1 is a block diagram of a data processing system, for example a typical personal computer (PC) 100. PC 100 comprises a motherboard 102 that accommodates a central processing unit (CPU) 104, main memory 106 (typically a volatile memory such as DRAM), a Basic Input/Output System (BIOS) 108 implemented in a non-volatile memory for booting PC 100, a fast SRAM cache 110 that is directly accessible to CPU 104, a graphics processing unit 112, and a variety of bus interfaces 114, 116, 118, 120 and 122, all coupled through a local bus 124. Graphics processing unit 112 serves to offload the compute-intensive graphics processing from CPU 104, as a result of which CPU 104 has more resources available for primary tasks. Unit 112 is connected to a display monitor 113. Interfaces 114-122 serve to couple a variety of peripheral equipment to motherboard 102. Interface 114 couples a mass storage 126, e.g., a hard drive, a mouse 128 and a keyboard 130 to local bus 124 via an Extended Industry Standard Architecture (EISA) bus 132. Interface 116 serves to couple local bus 124 to a data network 134, e.g., a LAN or WAN. Interface 118 serves to couple local bus 124 to a USB bus 136 for data communication with, e.g., a memory stick (not shown). Interface 120 serves to couple local bus 24 to an SCSI/IDE bus 138 for data communication with, e.g., an additional hard drive (not shown), a scanner (not shown), or a CD-ROM drive (not shown). The acronym "SCSI" stands for "Small Computer System Interface" and refers to a standard to physically connect a computer to peripheral devices for data communication. The acronym "IDE" stands for "Integrated Drive Electronics" and refers to a standard interface for connecting storage devices to a computer. Interface 122 serves to connect local bus 124 to a (peripheral Component Interconnect (PCI) bus that serves to connect local bus 124 with peripherals in the form of an integrated circuit or an expansion card (e.g., sound cards, TV tuner cards, network cards). Mass storage 126 typically stores the operating system (OS) 142 of PC 100, application programs 144 and data 146 for use with OS 142 and application programs 144. When PC 100 is operating, main memory 106 stores the data and instructions for OS 142 and applications 144.

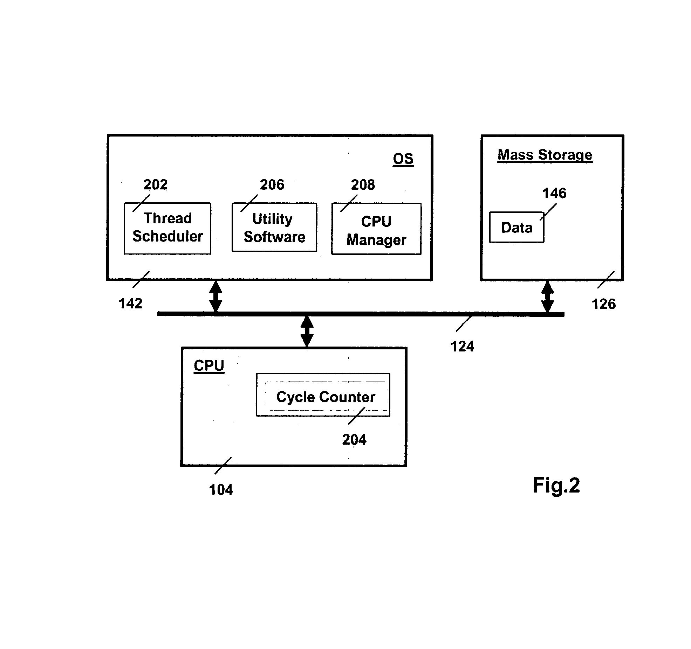

Fig.2 is a block diagram illustrating the cooperation between CPU 104 and part of OS 142 in an embodiment of the invention. OS 142 comprises a thread scheduler 202. Scheduler 202 determines which threads or processes are given access to system resources such as processing time on CPU 104, and thus controls the current workload of CPU 104. CPU 104 comprises a cycle counter 204. Cycle counter 204 is operative to track the number of CPU cycles spent on a specific thread.

Typically, data processors currently commercially available include a cycle counter. For example, a cycle counter is present on the processor chip itself. The cycle counter is, e.g., a 64-bit counter that runs at the speed of the processor. For example, in a 200 MHz processor, the cycle counter counts 200 million cycles, also referred to as ticks, per second. Preferably, the cycle counter is implemented in hardware so as to use as few resources as possible, and so as to be as granular as possible.

The article "Inside the Windows Vista Kernel: Part 1", TechNet Magazine, February 2007, discusses some aspects of Windows Vista, a series of operating systems developed by Microsoft. In Windows Vista, the scheduler uses the cycle counter register of modem processors to track precisely how many CPU cycles a thread executes. By estimating how many cycles the CPU can execute in a clock interval, it can more accurately dole out turns on the CPU. In addition, the Windows Vista scheduler does not count interrupt execution against a thread's turn. This means that on Windows Vista a thread will always get at least its turn on the CPU and never more than an extra clock interval of execution, resulting in greater fairness and more deterministic application behavior.

Accordingly, it is known in the art how to use cycle counter 204 in order to track the number of CPU cycles that is being spent by CPU 104 on executing a specific thread.

OS 142 comprises utility software 206. Utility software is also known in the art as service programs, service routines, tools, or utility routines. A utility is a type of computer software specifically designed to help manage and tune the computer hardware, operating system or application software. A utility performs typically a single task or a small range of tasks. Utility software is typically integrated into most major operating systems.

An example of utility software is Process Explorer, a freeware computer program for Microsoft Windows. Process Explorer is a system monitoring and examination utility. Process Explorer provides features that enable its user to track down problems. For example, it provides a means to list or search for named resources that are held by a process or all processes. This can be used to track down what is holding a file open and preventing its use by another program. As another example, it can show the command lines used to start a program, allowing otherwise identical processes to be distinguished. As another example, Process Explorer can show which thread (with the callstack) is using the CPU information. The TechNet Magazine article referred to above discloses a screenshot with a viewing window in the Process Explorer utility listing CPU cycles per thread as counted by counter 204 between two updates of the Process Explorer.

Accordingly, it is known in the art to generate the information about the number of CPU cycles spent on a thread per time interval, and to make this information accessible to the system and to the user of the utility.

In an embodiment of the invention, OS 142 also comprises a CPU manager (or: processor manager) 208. Manager 208 may also be regarded as a utility, but is shown separately. Manager 208 serves to control the accumulation of the numbers of CPU cycles, spent over time on a specific thread, and to store this information as data 146 into memory 126. For example, the number of cycles counted by counter 204 as spent on a specific thread between two consecutive updates of Process Explorer is used to update data 146.

In the invention, memory 126 stores a credit value for a specific application program. The credit value is representative of the remaining number of clock cycles available for future execution of the program. CPU manager 208 determines whether the credit value stored in memory 126 is higher than a predetermined threshold, e.g., zero or another lower bound. If the stored credit value is higher than the predetermined threshold, CPU manager 208 controls scheduler 202 to proceed with feeding to CPU 104 threads of the program for which the credit has been created. CPU 104 proceeds then with the execution of the program. CPU manager 208 further adjusts the credit value in memory 126 on the basis of the number of CPU cycles being currently (current session of interaction of end user with program) used by the data processor on execution of the code. For example, CPU manager 208 saves in a register (not shown) or in memory 106 or in memory 126, the number of CPU cycles, spent on this program between two consecutive updates of Process Explorer or of a similar utility. Then, this saved number, or another value representative thereof, is subtracted from the current credit value in memory 126 so as to update the credit value. With regard to the feature "another value thereof", it is remarked here that the credit value can be expressed in arbitrary practical units other than individual CPU cycles. For example, the credit is expressed in terms of 1,000 CPU cycles or 10,000 CPU cycles. Alternatively, the credit is expressed in terms of CPU time. Note that Process Explorer also provides information about the CPU time spent per thread. See the TechNet Magazine publication mentioned above. Accordingly, the invention monitors CPU utilization per thread and reduces the credit of the process associated with this thread while the process is active. At a certain time, the credit value of the program has decreased to the level of the predetermined threshold. CPU manager 208 then preventing the further execution of the program by instructing scheduler 202 to halt supplying of threads associated with this program. This can be done in a variety of manners, e.g., abruptly or gradually. The abrupt halting may occur at the moment that the credit value has reached the predetermined threshold or has dropped below the predetermined threshold for the first time at the Processor Explorer update. The gradual halting may include notifying the user of the program, through an auditory signal via the system's loudspeakers (not shown) or a visual signal via display monitor 113, well of advance of his/her credit value approaching the predetermined threshold or gradually reducing the level of QoS.

In order to be able to continue using the program (or to continue using the program to a fuller extent, e.g., with higher resolution graphics), the credit has to be replenished. This can be taken care of in a variety of manners.

In a first example, the user who desires to have his/her credit increased for the program, contacts a remote server (not shown) of a service provider via interface 116 and data network 134 such as the Internet and grants the provider permission to charge his/her bank account for the costs of a certain increase in credit for the program. The service provider then remotely configures the local credit in memory 126 to the corresponding level. The remote configuring can be done using technologies such as PayPal, in combination with a web service or OTA (over-the-air programming of mobile devices). The OTA mechanism is typically used in distributing software updates to mobile phones or in configuring their settings for enabling access to certain services.

In a second example, the user contacts the remote server and upon granting permission to charge the user's bank account, the service provider returns a personal password that the user needs to enter into system 100 in order to unlock a software utility locally to system 100 that restores the credit in memory 126. This kind of transaction is similar to one in, e.g., use of a virtual phone card. The virtual phone card service uses calling accounts. A calling account eliminates the need for a physical card. The accounts are available only in electronic form. Calling accounts can be purchased over the Internet using credit cards and are instantly delivered to the customer via e-mail or SMS (short message service) notification. This e-mail or SMS notification contains the personal password and instructions for using the service.

In a third example, the user purchases a disposable stored-value card from a service provider, similar to a pre-paid telephone card, that has a specific balance representing the credit for a specific program. The card is to be connected to system 100, e.g., via PCI bus interface 122, in order to enable operational use of the software program. A quantity representative of the number of CPU cycles used for the execution of the program is deducted from the balance. When the balance is exhausted, the user purchases a new card.

Many variations are possible on the theme of a business model for processing and adjusting the credit of a user with respect to a specific software program. For example, a service provider may supply to the end-user the program free of charge, but with a certain credit in terms of CPU cycles. This allows the user to familiarize with the program in order to determine whether or not he/she likes it. If the user likes the program, he/she needs to replenish the credit after it has run out. As another example, the frequency of usage of the program per individual user can be used to modulate the rate of decreasing the credit value. If the program is used more, the deductions from the credit per certain amount of CPU cycles are lower, thus motivating the users to actually spend time on the program. As another example, the deductions per certain amount of CPU cycles may decrease gradually over time so as to reflect a market value of the program. As yet another example, consider the scenario, wherein the software program tests some skills of the end-user, as in a computer game. If the performance of the user is measured by a software utility, associated with the program, as well above a certain level, the user may win points that the utility adds to his/her credit. As yet another scenario, consider a multi-player game in a networked, distributed environment. Each player obtains a copy of a software program in order to be able to interact with the other players via the network. Individual usage of the program is monitored per individual player locally at his/her PC in the manner illustrated and discussed above. In order to control bandwidth usage of the network and/or servers, the deductions from a player's credit can be tailored to, e.g., the time of the day or day of the week. In still another scenario, the individual credit consumption scenarios discussed above can be combined so as to have various factors influencing the rate of deduction per individual player or per group of players.

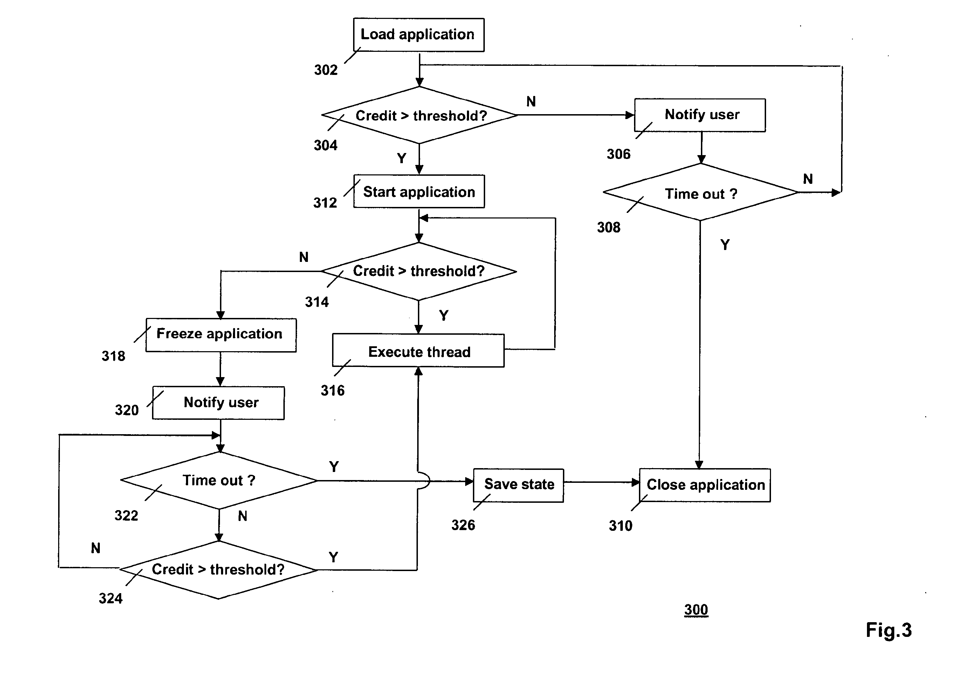

Fig.3 is a flow diagram 300 illustrating operation of an embodiment of the invention. In a step 302, the user loads or otherwise activates a specific software application at a data processing system, e.g., system 100. In a step 304, CPU manager 208 checks if the credit associated with this specific application and with this user is higher than a certain threshold.

If the credit is not higher than the threshold, the user is notified in a step 306, e.g., through a message displayed on display monitor 113, of his/her credit being insufficient, and of the fact that therefore the user is barred from using this application. The user may then act thereupon in order to replenish the credit, e.g., as discussed in the ways discussed above. In a step 308, it is checked if the user has taken proper action in time, e.g., by means of timely inserting into system 100 a valid pre-paid stored-value card. If the time to restore the credit has not elapsed, the process returns to step 304. If the time has run out, the process goes to a step 310 and closes the application.

If it has been determined in step 304 that the credit is higher than the threshold, the application is started in a step 312. After the application has started, the process checks in a step 314 if the credit is still higher than the threshold. If so, the process goes to a step 316 wherein the activity of the application continues. From there, the process returns to step 314 again so as to repeatedly check the credit level in operational use of the application, as the number of CPU cycles consumed get deducted. The repeated checking may be periodic, or may depend on the rate of how fast the credit is being consumed, or may depend on the actual level reached. If in step 414 it is determined that the credit is not higher than the threshold, the process freezes the application in a step 318. The application's state is saved temporarily in memory 106. The process then notifies the user in a step 320 of the insufficient credit, e.g., through a message on display monitor 113. The process gives the user, in a step 322, time to restore the credit. In a step 324, it is checked if the user has indeed restored the credit. If the credit has not been restored, the process returns to step 322. If time has run out, the process proceeds to a state 326 wherein the state of the application is saved in memory 126, whereupon the application is closed in step 310. If time has not run out yet according to step 322, the process goes to step 324 again to check the credit. If it is determined in step 324 that the credit has been restored, the process returns to step 316 to continue the application.

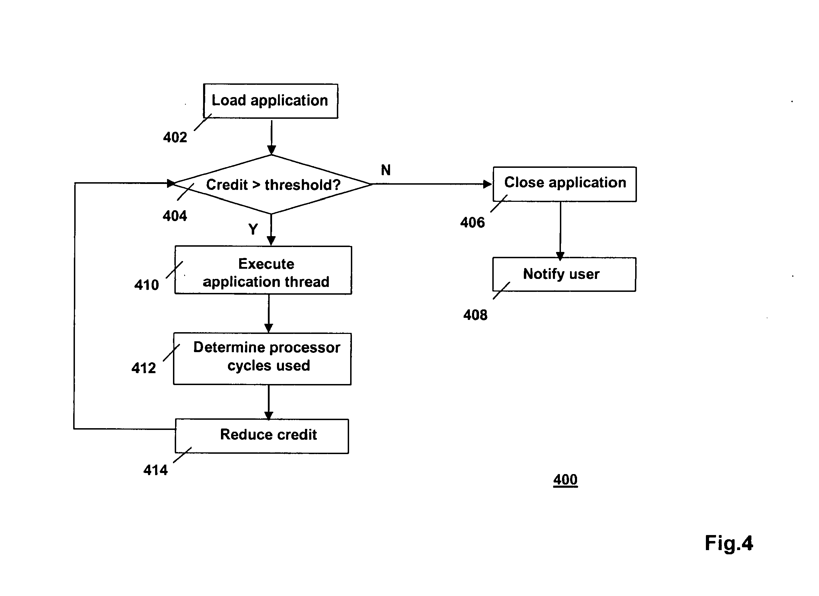

Fig.4 is a flow diagram 400 illustrating operation of another embodiment of the invention.
In a step 402, the user loads, or otherwise activates, a specific software application at a data processing system, e.g., system 100. In a step 404, CPU manager 208 checks if the credit associated with this specific application and with this user is higher than a certain threshold. If the credit is not higher than the threshold, the specific software application is closed in a step 406 and the user is notified of this in a step 408, e.g., via a message displayed on display monitor 113. The user has then the option to replenish the credit and restart the application by returning to step 402. If the credit level is higher than the threshold, then the next thread of the software application is executed in a step 410. The number of processor cycles used for executing the thread is determined in a step 412, on the basis of which the credit is adjusted in a step 414. The process returns then to step 404. Note that if the credit is too low and if the software application is not stopped but, instead, is put on hold, the following problem may emerge. If the software application is put on hold but not closed, CPU manager 208 does not allow the application's threads to be executed, although the application's threads are waiting in the queue. Other processes may have threads waiting in the queue as well, and their execution can get affected by the software application put on hold. A work-around could be to assign a low priority to the threads of the software application now put on hold. However, if there are no other processes than those of the specific software application, the threads may still get executed. Accordingly, it is then advisable to close the software application completely.

Features of different claims can be combined for other embodiments of the invention.

## Claims

1. A data processing system (100) comprising a data processor (104) for executing a code of a software application (144) for an end-user, wherein:
the system comprises a memory (106; 126) for storing a credit value representative of a number of processor cycles for being spent on execution of the code; and
the system comprises a processor manager (208) that is operative to control the execution of the code in dependence on the credit value.

2. The system of claim 1, wherein the processor manager is configured for preventing the execution of the code if the credit value is absent from the memory.

3. The system of claim 1, wherein:
the system comprises a cycle counter (204) for determining a specific number of processor cycles spent on execution of the code and for supplying information representative of the specific number of the processor cycles determined; and
the processor manager is operative to adjust the credit value on the basis of the specific number of processor cycles determined.

4. The system of claim 1, wherein the processor manager is operative to determine whether the credit value is higher than a predetermined threshold and to prevent the execution of the code if the credit value is not higher than the predetermined threshold.

5. The system of claim 1, wherein the system has means (134; 136; 140) for conditionally increasing the credit value upon a dedicated action of the end-user.

6. The system of claim 5, wherein the means comprises an interface (116) to a data network (134) for enabling a remote source to increase the credit value via the data network.

7. The system of claim 5, wherein the means comprises an interface (136; 140) for system interaction with a removable component for enabling to increase the credit value via system interaction with the removable component.

8. The system of claim 5, wherein the means comprises a module in the software application for conditionally increasing the credit upon the end-user entering a password into the system.

9. The system of claim 1, accommodated in an electronic apparatus.

10. A method of controlling execution of code of a software application (144) for an end-user on a data processing system (100), the system comprising a data processor (104) for executing the code, wherein the method comprises:
accessing a memory (106; 126) for identifying a credit value representative of a number of processor cycles for being spent on execution of the code; and
controlling the execution of the code in dependence on the credit value.

11. The method of claim 10, comprising preventing the execution if the credit value is absent from the memory.

12. The method of claim 10, comprising:
determining information representative of a specific number of processor cycles spent on the execution of the code; and
adjusting the credit value on the basis of the specific number of processor cycles determined.

13. The method of claim 10, comprising:
determining whether the credit value is higher than a predetermined threshold; and
preventing the execution of the code if the credit value is not higher than the predetermined threshold.

14. The method of claim 10, comprising conditionally increasing the credit upon a dedicated interaction of the end-user with the data processing system.

15. The method of claim 14, wherein:
the system comprises an interface (116) to a data network (134), and
the method comprises using the interface for increasing the credit value via the data network.

16. The method of claim 14, wherein:
the system comprises an interface (136; 140) for system interaction with a removable component for enabling to increase the credit value via system interaction with the removable component; and
the method comprises providing the removable component.

17. The method of claim 14, wherein:
the software application comprises a module for conditionally increasing the credit upon the end-user entering a password into the system; and
the method comprises providing the password.

18. Control software on a computer readable medium for controlling execution of a code of a software application on a data processing system (100), the system comprising a data processor (104) for executing the code for an end-user, wherein the control software comprises:
first instructions for accessing a memory (106; 126) in order to identify a credit value representative of a number of processor cycles for being spent on the execution of the code;
second instructions for implementing a processor manager functionality (208) operative to control the execution of the code in dependence on the credit value.

19. The control software of claim 18, wherein the second instructions include third instructions for preventing the execution of the code if the credit value is absent from the memory.

20. The control software of claim 18, wherein:
the system comprises a cycle counter (204) for determining a specific number of processor cycles spent on execution of the code and for supplying information representative of the specific number of the processor cycles determined; and
the second instructions comprise fourth instructions for adjusting the credit value on the basis of the specific number of processor cycles determined.

21. The control software of claim 18, wherein the second instructions comprise fifth instructions for determining whether the credit value is higher than a predetermined threshold and, if the credit value is not higher than the predetermined threshold, for preventing the execution of the code.

22. The control software of claim 18, comprising sixth instructions for conditionally increasing the credit value upon a dedicated interaction of the end-user with the data processing system.
